(19) **Europäisches Patentamt**
**European Patent Office**
**Office européen des brevets**

(11) **EP 3 691 258 B1**

(12) **EUROPEAN PATENT SPECIFICATION**

(45) Date of publication and mention
of the grant of the patent:
**15.09.2021 Bulletin 2021/37**

(51) Int Cl.:
**H04N 9/04** *(2006.01)* **H04N 5/225** *(2006.01)*
**H04N 5/235** *(2006.01)*

(21) Application number: **19154253.9**

(22) Date of filing: **29.01.2019**

(54) **SYSTEM AND METHOD FOR ACQUIRING IMAGES**

SYSTEM UND VERFAHREN ZUR AUFNAHME VON BILDERN

SYSTÈME ET PROCÉDÉ D'ACQUISITION D'IMAGES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**05.08.2020 Bulletin 2020/32**

(73) Proprietor: **Fondation de L'institut de Recherche**
**Idiap**
**1920 Martigny (CH)**

(72) Inventors:
• **Jaques, Christian**
**2000 Neuchâtel (CH)**

• **Liebling, Michael**
**1025 St-Sulpice (CH)**

(74) Representative: **P&TS SA (AG, Ltd.)**
**Avenue J.-J. Rousseau 4**
**P.O. Box 2848**
**2001 Neuchâtel (CH)**

(56) References cited:
**CN-A- 105 959 658      US-A1- 2010 032 546**
**US-A1- 2016 360 125**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The present invention concerns a system and a method for increasing the temporal resolution of an image of a scene, in particular of a video of a scene comprising one or several moving objects, acquired by an image sensor while the scene is illuminated by a multi-spectral illumination device.

Description of related art

There is an increasing interest for high-speed imaging systems and methods, not only for acquiring rapid sequences of images of rapid human and natural phenomena, but also for medical and biological imaging. In particular, reliable studies and observations of live organisms and of live forms require high-frequency frames acquisition (high-frame rate imaging).

Despite recent advances in hardware, common image acquisition devices have limited operation modes that constrain frame-rate, integration time, and colour sensing patterns, which hinder such studies and observations.

To increase the resolution beyond hardware through computation, some approaches have been proposed.

CN105959658 addresses this problem proposing a high-speed image acquisition system relying on a common RGB camera and on R/G/B lasers. The lasers are configured to provide three successive illuminations, each illumination being uniquely sensed by one of the RGB group of pixels of the camera during a non-overlapping time interval. Although this acquisition system permits to triple the frame rate of a common RGB camera, the object has to be colourless (e.g. shades of gray), the system requires an expensive set of R/G/B lasers, and the laser wavelengths have to match the RGB filter wavelength ranges of the camera.

Brief summary of the invention

The aim of the invention is to provide a system and a method devoid, or at least reducing the drawback of known systems and methods.

A particular aim is to provide a system and a method enabled by a common colour image sensor (notably by a common colour camera) and/or common sources of illumination.

Another particular aim is to provide a system and a method permitting a satisfactory extension of the temporal resolution even in case of a coloured scene.

According to the invention, these aims are achieved by means of the system of claim 1, the microscopy of claim 12 and the method of claim 13. Dependent claims describe advantageous embodiments of the invention.

This solution provides an increase of the temporal resolution of an image of a scene, for example a scene comprising moving object(s), by means of a commonly-available colour image sensor and by non-single-frequency/ broad spectrum illumination sources.

The proposed solution doesn't require a match between the hue of each single illumination of the sequence and one of the camera's colour filters (i.e. groups of sensor elements). Moreover, the proposed solution is enabled even in combination with an ambient light or a natural illumination illuminating the scene during the acquisition of the subspectral images.

The proposed solution permits thus a reduction of motion artefacts when imaging fast moving samples even with an illumination device based on common-use bright, reliable and low-cost illumination lights, such as colour-light emitting diodes (LEDs).

Moreover, the proposed solution permits a use of more combinations and sequences of illuminations, which permits to activate two (or more) LED lights at the same time, which brings a better light dynamics, rendering the sequence of illuminations visually less intrusive during image acquisitions.

The proposed solution also permits use of common-use image sensors, notably electron multiplying charge-coupled sensors (EM-CCD) and metal-oxide-semiconductor (CMOS) sensors providing faster acquisitions, with higher gains, and low electronic noise. In particular, the proposed solution can be enabled by common RGB or CMY image sensors.

Moreover, the proposed solution allows an extension of the temporal resolution of existing cameras (notably with external triggering) without requiring modification of their base functionality, while maintaining the same data acquisition bandwidth as the camera operated in standard mode.

Brief Description of the Drawings

The invention will be better understood with the aid of the description of an embodiment given by way of example and illustrated by the figures, in which:

Figs. 1-3 show schematic views of the image acquisition system, according to the invention;

Fig. 4 shows a set of colour-light emitting diodes usable with the image acquisition system of Figure 1;

Fig. 5 shows an exemplary sequence of illuminations usable with the image acquisition system of Figure 1;

Fig. 6a shows a view of an exemplary spectral contribution matrix and Fig. 6b, an exemplary spectral contribution reconstruction matrix provided by a given sequence of illuminations at different wavelengths produced with LEDs of Fig. 4;

Fig. 7 shows the performances of the image acquisition system of Figure 1 using given sequences of single-activated LEDs of Fig. 5;

Fig. 8 shows the performances of the image acquisition system of Figure 1 using given sequences with two or more activated LEDs of Fig. 5;

Fig. 9 shows a schematic view of a generation of a set of output images from the set of subspectral images, based on the illuminations at given times;

Figs. 10a-10c show the modes of operation of the image acquisition system of Fig. 1.

Detailed Description of possible embodiments of the Invention

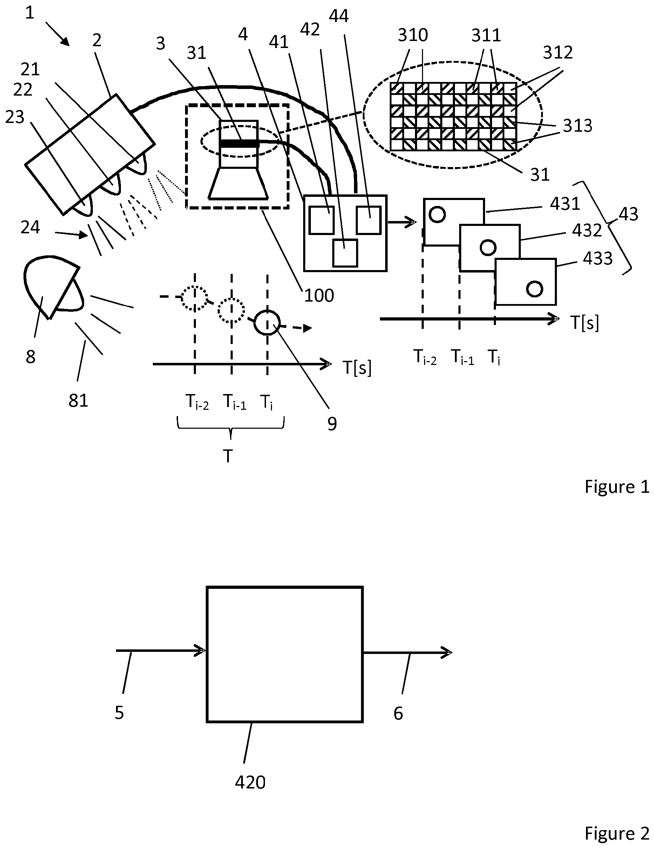

Figure 1 shows an image acquisition system 1 comprising an illumination device 2 for illuminating a scene comprising an object 9 and a camera 3 comprising an image sensor 31. The image sensor comprises a plurality of groups 311, 312, 313 of sensor elements 310, each group of sensor elements providing a subspectral image of the scene by sensing a different spectral portion of the electromagnetic spectrum (including but not limited to the electromagnetic spectrum that is visible to the human eye).

The spectral portions sensed by the groups of sensor elements can cumulatively cover the entire visible spectrum.

In particular, the image sensor can be a common colour image sensor, i.e. a sensor configured to provide a representation of colours of the captured scene. In this case, the spectral portions sensed by the groups of sensor elements provide a representation of colours of the captured scene. Examples are: RGB image sensors and CMY image sensors.

The image sensor 31 can comprise a Bayer filter separation providing these groups of sensing elements. Alternatively, the image sensor can comprise superposed wavelength-dependent layers (i.e. groups) of sensing element. Alternatively, the image sensor 31 can comprise a dichroic prism and (three) discrete image sensors (i.e. groups of sensing elements). Alternatively, the image sensor 31 can comprise a grating or equivalent optical device for spatially separating the spectral components and collecting their intensity in multiple discrete image sensors (i.e. groups of sensing elements).

The image sensor can be configured to provide a rectangular or squared (multi-spectral) image. Alternatively, the image sensor can be configured to provide another geometrical-shaped (multi-spectral) image.

As illustrated in the embodiment of Figure 1, the image sensor 31 can be an RGB image sensor 31, notably provided by a Bayer filter. The first group 311 of sensing elements of the image sensor 31 is thus configured to sense a spectral portion of the visible spectrum perceived as red (e.g. 570-650 nm wavelengths), the second group 312 of sensing elements is thus configured to sense a spectral portion of the visible spectrum perceived as green (e.g. 470-570 nm wavelengths), the third group 313 of sensing elements is thus configured to sense a spectral portion of the visible spectrum perceived as blue (e.g. 420-500 nm wavelengths).

In order to increase the temporal resolution of the image sensor 31, the image acquisition system 1 further comprises a controller 41 configured to control the image sensor 31 for triggering an acquisition of a (multi-spectral) image and the illumination device 2 for illuminating the scene with a given sequence of illuminations 24 at different wavelengths. In the illustrated embodiment, the controller 41 controls the acquisition on the (multi-spectral) image by sending a command to an external trigger port of the camera 3.

In particular, the controller is configured to control:

the image sensor (31) for acquiring a set of subspectral images 321, 322, 323 of the scene during an acquisition time duration, and
the illumination device 2 for providing the (given) sequence of illuminations 24 during this (given) time duration (T), each illumination in the sequence being at a different wavelength.

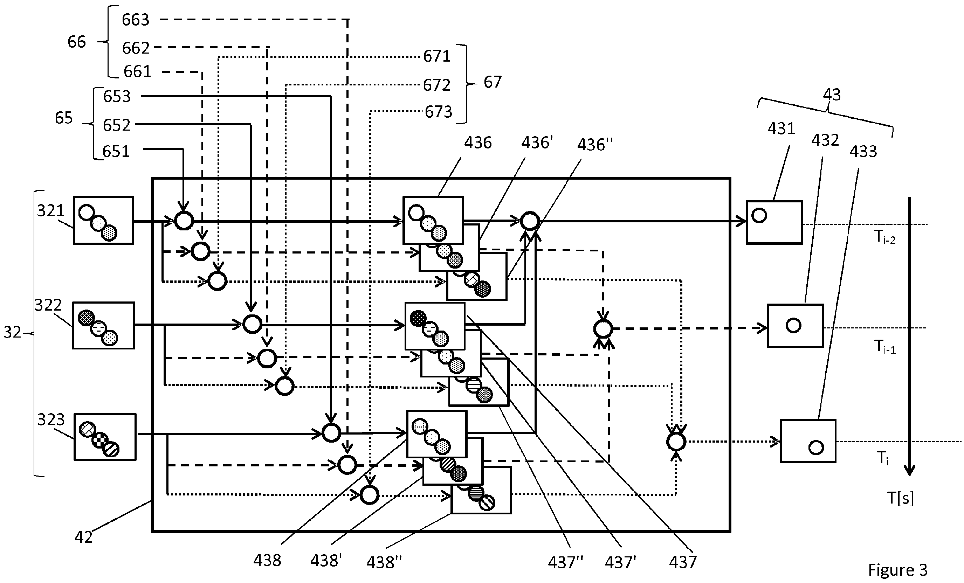

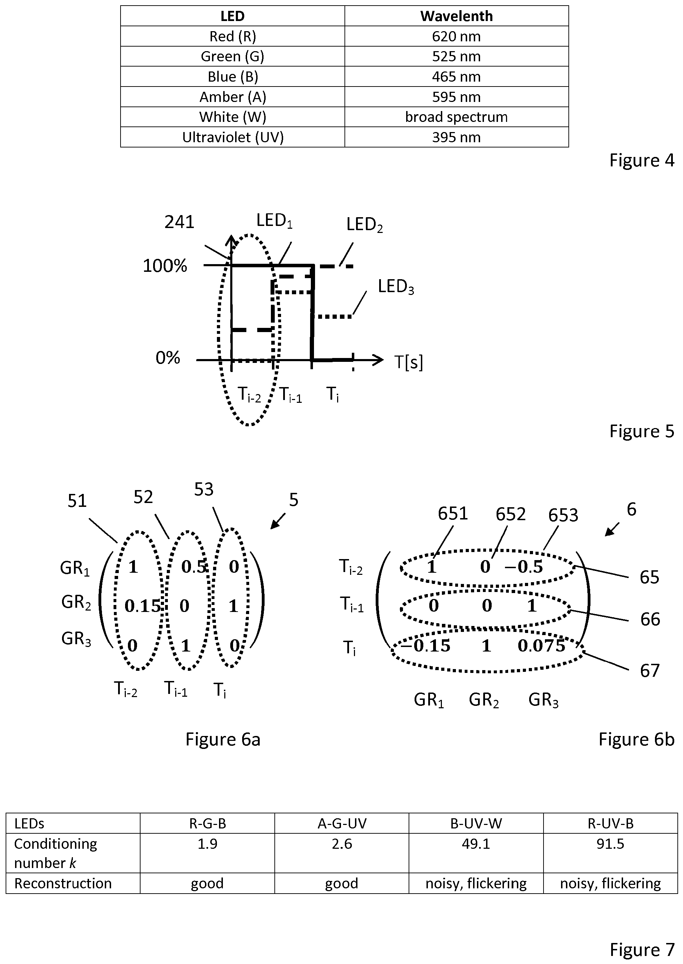

According to the invention, by illumination it is meant a supply and/or a use of light (i.e. electromagnetic radiation within a certain portion of the electromagnetic spectrum), notably of visible light, ultraviolet light and/or infrared light.
The (given) sequence of illuminations comprises a plurality of temporarily successive illuminations, each being distinct from the others, i.e. having a different wavelength
The duration of the illumination at each time might be different, for example shorter, from the duration of the image capture with the image sensors.
The image acquisition system 1 comprises an unmixer 42 configured to provide a sequence 43 of output images 431, 432, 433 of the scene at given times ($T_{i-2}$, $T_{i-1}$, $T_i$), from the subspectral images 321, 322, 323 and based on the illuminations at these given time ($T_{i-2}$, $T_{i-1}$, $T_i$). The different times are separated by a time interval, preferably a constant time interval.
The unmixer produces high frequency sequences of output images; each sequence comprises a first output image corresponding to the contribution of the first illumination at a first time on each sensor element; a second output image corresponding to the contribution of the second illumination at a second time on each sensor element; and a third output image corresponding to the contribution of the third illumination at a third time on each sensor element.
The image acquisition system 1 is thus configured to operate with one or more illuminations being sensed by a plurality (i.e. at least two of) the groups of sensor elements 310.
In fact, as illustrated in Figure 3, the unmixer 42 is configured to provide the output images 431-433 by weighting each subspectral image 321, 322, 323 according to spectral reconstruction contributions 6, 65, 66, 67 derived from the spectral contribution 5 provided by each illumination to each group of sensor elements (cf. Figure 2 and 6), and by successively combining these weighted subspectral images together.
The spectral contributions 5, 51, 52, 53 describe the impact provided by an illumination to a group of sensor elements (cf. Figure 6a). In particular, the spectral contribution represents the proportional response of each of the sensor elements of the group when illuminated by a known quantity of this illumination. The value can be expressed as absolute or relative values.
The spectral reconstruction contributions 6, 65, 66, 67 (cf. Figure 6b) can be obtained via exact or approximate matrix inversion methods of the number matrix (cf. Figure 6a) composed of the spectral contributions 5, 51, 52, 53, e.g. by means of a spectral reconstruction component calculation module 420, as schematically illustrated by Figure 2.
The spectral reconstruction contributions 6 can also be obtained by use of a neuronal network trained such that they accurately re-produce known output images given the spectral contributions 5, 51, 52, 53.
The reconstruction spectral contributions 6 can also be obtained by means of error-minimizing algorithms such as gradient descent methods.
The image acquisition system 1 allows to increase the temporal resolution of the image sensor 31 (e.g. triple the frame rate of the illustrated RGB camera 3), even in case of a coloured scene comprising coloured objects 9.
Moreover, the image acquisition system 1 does not require a match between (the wavelength of) each illumination with the spectral portion of one of the groups of sensor elements, i.e. the image acquisition system 1 does not require that each illumination has to be sensed by a unique group of sensor elements. This permits to use common sources of illumination, such as LEDs, rather than expensive R/G/B lasers.
Moreover, the proposed solution does not require an absolute control of the entire illumination of the scene, notably by placing an object into a dark room. In fact, the image acquisition system 1 allows a combination of controlled illuminations (i.e. illumination provided by the illumination device 2) with another common illumination 81, such as an artificial light, an ambient light, or natural illumination.
In case of a combined illumination, the spectral contributions 5 (cf. Figure 5) provided by each illumination to each group of sensor elements comprises the spectral contributions 5 (cf. Figure 5) provided by the illuminations generated by the illumination device 2 as well as by the common illumination, to each group of sensor elements.
Moreover, the use of broad spectrum illuminations brings a better light dynamics, rendering the sequence of illuminations visually less intrusive during image acquisitions.
As illustrated in Figure 3, the unmixer 42 is configured to provide a first output image 431 at a first time $T_{i-2}$ by:

obtaining a (first) set of weighted subspectral images 436, 437, 438 from the set 32 of subspectral image 321, 322, 323, according to the spectral reconstruction contributions 65 derived from the spectral contribution 5 (notably from the spectral contribution 51 provided by the illumination 241 at this first time $T_{i-2}$ to each group (311, 312, 313) of sensor elements); and then
combining all of these weighted subspectral images together.

In particular, the spectral reconstruction contribution 65 is derived by (mathematically) inverting the matrix 5 formed by spectral contributions 51, 52, 53, provided by the illumination 241, 242, 243 at the first time $T_{i-2}$, second time $T_{i-1}$ and third time ($T_i$), respectively, and selecting the first column set 65 of said inverted matrix.

The (first) weighted subspectral image 436 is thus obtained by weighting the subspectral image 321 provided by the first group of sensing element according to the (first) spectral reconstruction contribution 651, i.e. the spectral reconstruction contribution related to the first group of sensing elements and first time.

The (second) weighted subspectral image 437 is thus obtained by weighting the subspectral image 322 provided by the second group of sensing element according to the (second) spectral reconstruction contribution 652, i.e. the spectral reconstruction contribution related to the second group of sensing elements and first time.

The (third) weighted subspectral image 438 is thus obtained by weighting the subspectral image 323 provided by the third group of sensing element according to (by) the (third) spectral reconstruction contribution 653, i.e. the spectral reconstruction contribution related to the third group of sensing elements and first time.

The (first) illumination at the first time $T_{i-2}$ comprises the illumination provided by the illumination device 2 and, if used/applied, the common illumination 81.

The unmixer 42 can thus be configured to provide a second output image 432 at a (second) time ($T_{i-1}$) by: obtaining a (second) set of weighted subspectral images 436', 437', 438' by weighting each subspectral image 321, 322, 323 according to the spectral reconstruction contribution 66. The second output image 432 is then obtained by combining these weighted subspectral images.

In particular, the second set of weighted subspectral images is obtained by weighting each subspectral image 321, 322, 323 provided by each group of sensing elements according to (by) the spectral reconstruction contributions 66 (i.e. 661, 662, 663), the spectral reconstruction contribution 66 being derived by (mathematically) inverting the matrix 5 formed by spectral contributions 51, 52, 53, provided by the illumination 241, 242, 243 at the first time $T_{i-2}$, second time $T_{i-1}$ and third time ($T_i$), respectively, and selecting the second column 66 of said inverted matrix.

The (second) illumination at this second time $T_{i-1}$ comprises (consists in) the illumination provided by the illumination device 2 and, if used/applied, the common illumination 81.

The third output image 433 at a (third) time ($T_i$) can be provided by combining subspectral images 436", 437", 438" being weighted according to the spectral reconstruction contribution 67. The third output image 433 is then obtained by combining these weighted subspectral images.

In particular, the third set of weighted subspectral images is obtained by weighting each subspectral image 321, 322, 323 provided by each group of sensing elements according to (by) the spectral reconstruction contributions 67 (i.e. 671, 672, 673) being derived by (mathematically) inverting the matrix 5 formed by spectral contributions 51, 52, 53, provided by the illumination 241, 242, 243 at the first time $T_{i-2}$, second time $T_{i-1}$ and third time ($T_i$), respectively, and selecting the third column 67 of said inverted matrix.

The (third) illumination at this third time $T_i$ comprises (consists in) the illumination provided by the illumination device 2 and, if used/applied, the common illumination 81.

The common illumination 81 can be provided by the illumination device 2. The common illumination 81 can, alternatively and/or complementarily, be provided by another illumination source 8, this source being a natural or artificial source.

In particular, the spectral reconstruction contributions 65, 66, 67 (e.g. the first, second and third spectral reconstruction contributions 651, 652, 653, 661, 662, 663, 671, 672, 673) can be derived by an inversion procedure involving the three spectral contribution triplets 51, 52, and 53, i.e. the spectral contributions 51, 52, 53 provided by the illuminations at the first, second and third time Ti, $T_{i-1}$, $T_{i-2}$ to each group 311, 312, 313 of sensor elements (cf. Figure 6b).

In fact, the spectral reconstruction contributions 65, 66, 67 can be derived by inversing the contribution matrix A collecting the triplets 51, 52, 53 (i.e. the spectral contributions provided by the illuminations at the various time to each group 311, 312, 313 of sensor elements), e.g.

$$(A^T A)^{-1}$$

wherein A is the contribution matrix comprising the triplets 51, 52, 53.

Advantageously, the sequence of illuminations can be provided by controlling a set of illumination sources 22, 23, 24, notably by varying the intensity provided by each of these illumination sources, from zero (e.g. 0%) up to a maximal intensity (e.g. 100%).

The image acquisition system 1 can thus increase the temporal resolution of a camera, notably of an image sensor 31 thereof, equipping a microscope 100.

The controller 41 and/or the unmixer 42 can be in form of (dedicated) electronic circuits or part (e.g. sharing hardware resources) of a computational unit 4 of the image acquisition system 1.

Figure 4 shows an exemplary set of emitting diodes (LEDs) usable with the image acquisition system 1, while Figure 5 shows an exemplary sequence of illuminations obtainable by combining such colour-light, white and/or invisible-light emitting diodes.

Each of the set of illumination sources 21,22, 23, or at least a sub-set of the illumination sources, provides an illumination, i.e. an electromagnetic radiation, with a wavelength or a wavelength range that is different from others. Some of these illumination sources (or sub-sets of illumination sources) can be colour-light illumination sources (e.g. LEDs), i.e. providing an electromagnetic radiation being perceived as coloured by humans. Others sources (or sub-sets of the set of illumination sources) can be white emitting source, i.e. emitting diodes providing an electromagnetic radiation being perceived as white and/or neutral by humans. Other sources (or sub-sets of the set of sources) can be sources providing an illumination not visible by human, i.e. an electromagnetic radiation with a wavelength or a wavelength range that is outside the visible spectrum, e.g. Ultraviolet (UV) or infrared (IR) spectrum.

Preferably, the set of illumination sources comprises a sub-set of illumination sources, each providing an electromagnetic radiation being dominantly sensed by one of the different groups of said groups of sensor elements. In the embodiment of Figure 1, the set of illumination sources comprises a red illumination source (notably a red LED) providing a radiation perceived as red, a green illumination source (notably a green LED) providing a radiation perceived as green, and a blue illumination source (notably a blue LED) providing a radiation perceived as blue. This arrangement permits to easily provide a sequence of illuminations, each providing a given (desired) spectral contribution to each groups of sensor elements.

The controller can thus be configured to control the illumination device 2 so as to selectively activate (notably to vary the intensity provided by) each emitting diode or each sub-set of emitting diodes, as illustrated in Figure 5.

In particular, the use of a set of illumination sources, each providing an illumination with a different spectrum (e.g. wavelength or wavelengths band) permits to (easily and cost-effectively) dispose of a larger selection of sequences of illuminations.

Moreover, an activation of a plurality (e.g. two or more) of illumination sources, e.g. LEDs, at the same time, provides better light dynamics, rendering the sequence of illuminations visually less intrusive during the acquisition(s) of (multi-spectral) images of the scene.

Advantageously, the image acquisition system of Figure 1 further comprises a calibration unit 44 configured to determine the spectral contributions 51, 52, 53 provided by the response of a calibration object to each illumination and to each group of sensor elements. Advantageously, the calibration unit 44 can be further configured to determine the spectral reconstruction contributions 65, 66, 67 from the determined (measured) spectral contributions 51, 52, 53. In particular, the calibration unit 44 can be configured to trigger a reference (multi-spectral) image of a calibration object (notably having a reference surface of a given hue) being illuminated by the same sequence of illumination to (preferably automatically or semi-automatically) determine the spectral contribution of each illuminations.

This arrangement permits to (rapidly and effectively) determine the spectral contribution of each illumination, notably in case of a combination of controlled illuminations (i.e. illumination provided by the illumination device 2) with another common illumination 81, such as an artificial light, an ambient light, or a natural illumination.

The calibration unit 44 can be in the form of a (dedicated) electronic circuit or part of the computational unit 4 of the image acquisition system 1.

As illustrated in Figure 6a, the spectral contribution provided by the illuminations at the relevant times can take the form of a (spectral contribution) matrix 5, wherein each element of the matrix represents the spectral contribution of a given illumination (e.g. the illumination at a given time) to one of the groups of sensor elements.

As illustrated in Figure 6b, the spectral reconstruction contribution 6 can also take the form of a matrix, wherein each element of the matrix represents the spectral reconstruction contribution for a given time and group of sensor elements.

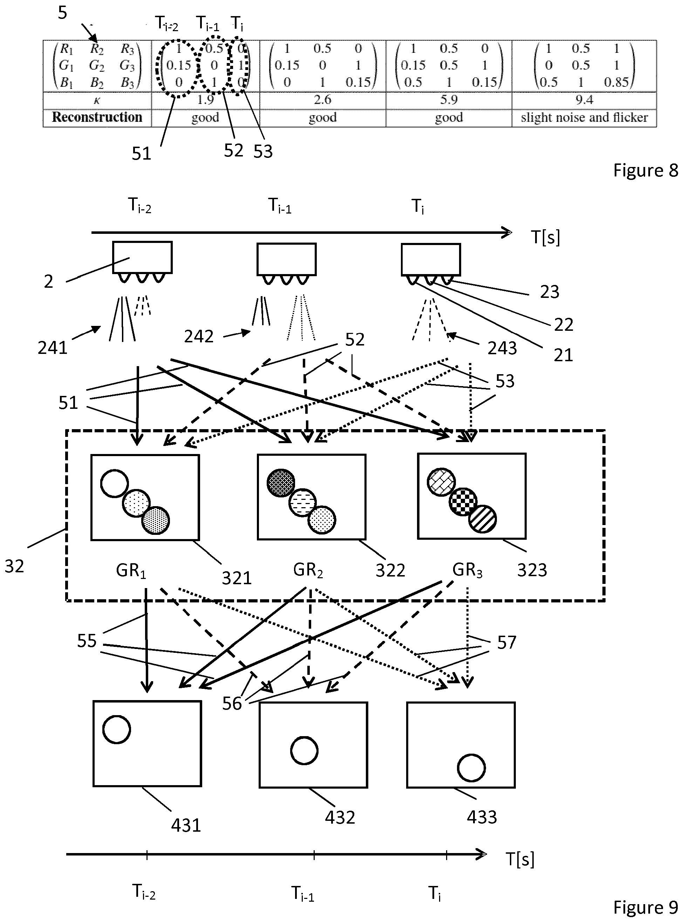

Various tests have been realized by the applicant using various sequences of illuminations, as illustrated in Figures 7 and 8.

Figure 7 shows the observed performances of the image acquisition system 1 using various combinations of illuminations generated by the illumination device 2, each sequence involving an activation of a single source illumination for each of the (given) times.

In particular, the illustrated performance relate to the following (activation) vectors (e.g. matrix):

$$S_{LED1}[T_i, T_{i-1}, T_{i-2}] = [\ 1, 0, 0],$$

$$S_{LED2}[T_i, T_{i-1}, T_{i-2}] = [\ 0, 1, 0],$$

$$S_{LED3}[T_i, T_{i-1}, T_{i-2}] = [\ 0, 0, 1],$$

wherein $S_{LED1}$, $S_{LED2}$ and $S_{LED3}$ relate to the control of the first, second and third illumination source of the illumination device 2, and

wherein 0 and 1 mean inactivation (0%) and full activation (100%), respectively, of the concerned illumination source for the related time.

Figure 8 shows the performances of the image acquisition system of Figure 1 using various combinations of illumination sequences generated by the illumination device 2, each sequence involving an activation of two or more illumination sources providing the illustrated spectral contribution matrix.

The applicant found that some sequences of illuminations provide good performance, i.e. a reconstruction of a set of optically excellent output images from a (multi-spectral) image, while others provide fair or low-quality output images.

In particular, the applicant found that the performance is inversely related to (notably function of) the cross-sensitivity between the illuminations provided at the (given) times. In particular, the applicant found that a well-conditioned (spectral contribution) matrix 5 provides good image outputs.

In the field of numerical analysis, the condition number of a function or matrix provides a measure of the sensitivity of the output value with respect to a small change in the input argument. In case of a linear equation Ax=b, the condition number associated with a linear equation

$$Ax = b,$$

the condition number (k) is

$$k(A) = \sigma_{\max}(A) \, / \, \sigma_{\min}(A)$$

where $\sigma_{\max}(A)$ and $\sigma_{\min}(A)$ are, respectively, the maximal and minimal singular values of the matrix.

The applicant found that a spectral contribution matrix 5 (i.e. a matrix collecting the spectral contribution of each illumination at each time of interest) with a condition number less than 20, preferably less than 10, provides good images at output, as illustrated in Figure 7 and 8.

As briefly introduced, the image acquisition system 1 can rely on other image sensors than an RGB image sensor (notably having another number of distinct groups of sensor elements, such as image spectrometers), on other sequences of illuminations as well as on other increase factors of the temporal resolution, the increase factor can be as high as the number of groups of sensor elements.

Considering:

the imaging system 1 consisting of L, co-located, illumination light sources that are synchronized to an image sensor with C groups of sensor elements;

the image sensor having a global shutter, i.e. each sensor element collects light over the same duration of time; and

each light source having a fixed spectrum while the overall intensity can be varied over the duration of the camera shutter time;

the vector $Y = (Y_1, ..., Y_C)^T$ denotes a single colour pixel of the (multi-spectral) image 32 provided by the image sensor 31,

$$Y_c = \int_0^E \left( \sum_{\ell=1}^L \gamma_{\ell,c} x(t) s_\ell(t) \right) dt + D_c$$

$$= D_c + \sum_{\ell=1}^L \gamma_{\ell,c} \int_0^E x(t) s_\ell(t) dt,$$

where x(t), wherein $t \in [0, E)$, is the output image at one spatial location, E is the exposure time (e.g. the duration time T), $s_\ell(t) \in R_0^+$ is the intensity function of the $\ell^{th}$ active light over time, $D_c \in R_0^+$ is an electronic bias for group c and $\gamma_{\ell,c} \in R_0^+$ is the spectral impact (spectral contribution) of the $\ell^{th}$ light on group c.

The imaged signal x(t) can be thus modelled as:

$$x(t) = \sum_{i=1}^{Q} x[i]\beta^0(Q \cdot (t-i)),$$

with Q an integer number of steps (times) over the exposure time, $x[i]$ , $i = 1$ , ..., Q, the values of x(t) at each step, and

$$\beta^0(t) = \begin{cases} 1 & \text{if } 0 \le t < 1 \\ 0 & \text{otherwise,} \end{cases}$$

the causal B-spline of degree 0 (box function).

Given this model for the signal x(t), Y(c) can be rewritten as

$$D_c + \sum_{\ell=1}^{L} \gamma_{\ell,c} \sum_{i=1}^{Q} x[i]S_\ell[i],$$

with

$$S_\ell[i] = \int_0^E \beta^0(Q \cdot (t-i))\,s_\ell(t)\mathrm{d}t$$

$$= \int_{(i-1)\cdot E/Q}^{i\cdot E/Q} s_\ell(t)\mathrm{d}t.$$

In particular, Y(c) can be rewritten in matrix form:

$$Y = S_Q \Gamma_Q x + D,$$

where x = $(x[1] \cdots x[Q])^{\mathsf{T}}$ is the vector of signal samples, D = $(D1 \cdots D_C)^{\mathsf{T}}$ is a bias vector, and $S_Q$ contains the time coefficient of the L lights:

$$S_Q = \left( S_Q^1 \quad \cdots \quad S_Q^\ell \quad \cdots \quad S_Q^L \right)_{C \times CQL},$$

with:

$$S_Q^\ell = \begin{pmatrix} S_\ell[1,\ldots,Q] & \mathbb{0}_{1\times Q} & \cdots & \mathbb{0}_{1\times Q} \\ \mathbb{0}_{1\times Q} & \ddots & \cdots & \vdots \\ \vdots & \ddots & \ddots & \mathbb{0}_{1\times Q} \\ \mathbb{0}_{1\times Q} & \cdots & \mathbb{0}_{1\times Q} & S_\ell[1,\ldots,Q] \end{pmatrix}_{C \times CQ}$$

The matrix $\Gamma$ is built as:

$$\Gamma_Q = \left[ \left( \Gamma_Q^1 \quad \cdots \quad \Gamma_Q^\ell \quad \cdots \quad \Gamma_Q^L \right)^{\mathsf{T}} \right]_{CQL \times Q},$$

with

$$\Gamma_Q^{\ell} = \left[\left(\gamma_{1,\ell}I_Q \quad \cdots \quad \gamma_{c,\ell}I_Q \quad \cdots \quad \gamma_{C,\ell}I_Q\right)^{\top}\right]_{CQ \times Q},$$

where $I_Q$ is the identity matrix of size Q and $\mathbb{0}\, m \times n$ a matrix with m rows and n columns of zeros.

The super-resolution problem is therefore equivalent to retrieving the signal x from a single colour pixel Y by solving the above-described equations. When the number of channels C is at least equal to the super-resolution factor Q, approximate solutions in the least-squares sense can be implemented, that is

$$x^{\star} = \min_{x} \left\|Y - D - S_Q\Gamma_Q x\right\|_2^2$$

The coefficients in matrix $\Gamma_Q$ and in the bias vector D are advantageously known beforehand, as well as the measured colour pixel Y and the user-controlled illumination pattern $S_Q$. As previously described, these parameters can be determined via a calibration procedure in which a (multi-spectral) image of a static scene is acquired with a series of fixed illumination patterns that combine contributions from one or several illumination sources of the system. In particular, the static scene can be illuminated with P static intensity combinations of the illumination sources of the system. These patterns can be specified by a user or an operator of the system 1 (or of the microscope 100). He can thus manually select an area, comprising M pixels, on which he wants to calibrate his system.

Alternatively, the super-resolution problem can be implemented, alternatively, by minimizing the following norm, where $0 < p < \infty$

$$x^{\star} = \min_{x} \left\|Y - D - S_Q\Gamma_Q x\right\|_p$$

Moreover, the above-described image acquisition system can be configured to provide a coloured output image, notably by weighting the intensity of the output image based on colour information (e.g. by a corresponding colour triplet) so as to produce a colour-accurate representation of a moving object.

In fact, the calibration unit can be configured to recover this colour information (i.e. colour triplet) representing the hue of the scene beforehand during the calibration procedure. Alternatively, the image acquisition system can be configured to acquire a reference image of the scene by means of the image sensor 31, the scene being illuminated by an illumination covering the (entire) visible spectrum (e.g. white illumination).

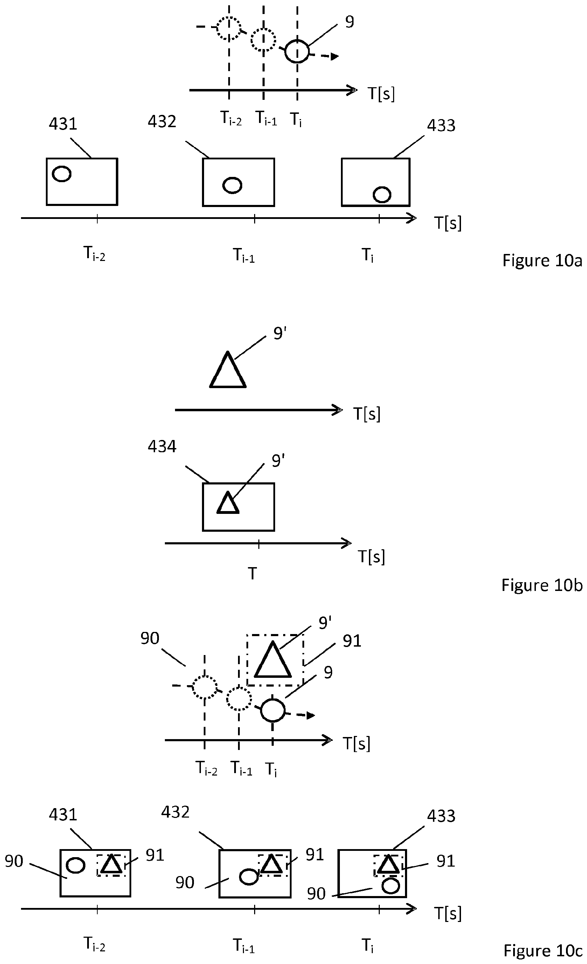

As illustrated in Figures 10a-10c, the image acquisition system 1 can advantageously be configured to operate in one of the following operation modes, based on the behaviour of the (captured or to be captured) object 9, 9', notably based on its static or dynamic nature:

moving object operating mode (cf. Figure 10a);
static object operating mode (cf. Figure 10b);
region-of-interest (ROI)-based operating mode (Cf. Figure 10c).

In the moving object operating mode, the image acquisition system 1 provides the sequence of output images 431, 432, 433 of the object 9 as above-described.

In the static object operating mode, the image acquisition system 1 provides an output image 434 based on a subspectral image of the scene comprising the object 9'. During the image acquisition, the image acquisition system 1 can be configured to (control the illumination device 2 to) illuminate the scene with the object 9' by an illumination covering the entire visible spectrum (e.g. white illumination), so as to output a colour image of the (static) object 9'.

In the ROI-based operating mode, the image acquisition system 1 provides the sequence of output images 431, 432, 433 by weighting uniquely a portion of the of each subspectral image of the set 32, the portion being defined with respect to a dynamic ROI 90 and/or static ROI 91. In particular, the portion can be defined as corresponding to the dynamic ROI 90 and/or as excluding the static ROI 91.

The image acquisition system 1 can be configured to (automatically) detect the nature of an object in the scene, i.e. whether the object is a static or a dynamic object.

Alternatively or complementarily, the image acquisition system 1 can be configured to permit a user to select the nature of an object in the scene to be captured. The nature can be provided by means of an interface of the image acquisition system 1, such as a switch, a keyboard, a touchscreen, a mouse, or button. The nature can be alternatively or complementarily provided by a wired or wireless link linking a user's device to the image acquisition system 1.

**Reference signs used in the drawings**

| | |
|---|---|
| 1 | Image acquisition system |
| 2 | Illumination device |
| 21 | 1st illumination source |
| 22 | 2nd illumination source |
| 23 | 3th illumination source |
| 24 | Sequence of illuminations |
| 241 | Illumination at $T_{i-2}$ |
| 242 | Illumination at $T_{i-1}$ |
| 243 | Illumination at $T_i$ |
| 3 | Camera |
| 31 | Image sensor |
| 310 | Sensor element |
| 311 | 1st group of sensor elements |
| 312 | 2nd group of sensor elements |
| 313 | 3th group of sensor elements |
| 32 | Set of subspectral images |
| 321 | 1st subspectral image |
| 322 | 2nd subspectral image |
| 323 | 3th subspectral image |
| 4 | Computational unit |
| 41 | Controller |
| 42 | Unmixer |
| 420 | Spectral reconstruction component calculation module |
| 421 | 1st subspectral image |
| 422 | 2nd subspectral image |
| 423 | 3th subspectral image |
| 43 | Sequence of output images |
| 431 | 1st output image (at $T_{i-2}$) |
| 432 | 2nd output image (at $T_{i-1}$) |
| 433 | 3rd output image (at $T_i$) |
| 434 | Output image |
| 436, 436', 436" | 1st weighted subspectral image |
| 437, 437', 437" | 2nd weighted subspectral image |
| 438, 438', 438" | 3rd weighted subspectral image |
| 44 | Calibration unit |
| 5 | Spectral contribution of the sequence of illuminations |
| 51 | Spectral contribution of illumination at $T_{i-2}$ |
| 52 | Spectral contribution of illumination at $T_{i-1}$ |
| 53 | Spectral contribution of illumination at $T_i$ |
| 6 | Spectral reconstruction contributions |
| 65 | Spectral reconstruction contribution of illumination at $T_{i-2}$ |
| 651 | Spectral reconstruction contribution of illumination at $T_{i-2}$ to 1st group of sensor elements |
| 652 | Spectral reconstruction contribution of illumination at $T_{i-2}$ to 2st group of sensor elements |
| 653 | Spectral reconstruction contribution of illumination at $T_{i-2}$ to 3rd group of sensor elements |
| 66 | Spectral reconstruction contribution of illumination at $T_{i-1}$ |
| 661 | Spectral reconstruction contribution of illumination at $T_{i-1}$ to 1st group of sensor elements |
| 662 | Spectral reconstruction contribution of illumination at $T_{i-1}$ to 2nd group of sensor elements |
| 663 | Spectral reconstruction contribution of illumination at $T_{i-1}$ to 3rd group of sensor elements |
| 67 | Spectral reconstruction contribution of illumination at $T_i$ |
| 671 | Spectral reconstruction contribution of illumination at $T_i$ to 1st group of sensor elements |

| 672 | Spectral reconstruction contribution of illumination at $T_i$ to 2nd group of sensor elements |
| 673 | Spectral reconstruction contribution of illumination at $T_i$ to 3rd group of sensor elements |
| 9 | (Moving) object in a scene |
| 9' | (Static) object in a scene |
| 100 | Microscope |
| $T_i$, $T_{i-1}$, $T_{i-2}$ | Times |
| $GR_1$, $GR_2$, $GR_3$ | 1st, 2nd, 3rd group of sensor elements |
| $LED_1$, $LED_2$, $LED_3$ | 1st, 2nd, 3rd LED |

**Claims**

1.  An image acquisition system (1) comprising:

    an illumination device (2) for illuminating a scene (9);
    an image sensor (31) comprising a plurality of groups (311, 312, 313) of sensor elements (310), each group of sensor elements providing a subspectral image of the scene by sensing a different spectral portion of the electromagnetic spectrum, preferably of the visible spectrum;
    a controller (41) configured to control:

    the image sensor (31) for acquiring a set of subspectral images (321, 322, 323) of the scene during an acquisition time duration, and
    the illumination device (2) for providing a given sequence of illuminations (24) at different wavelengths during said given time duration (T); and

    an unmixer (42) configured to provide a plurality of sequences (43) of output images (431, 432, 433) of the scene (9), each sequence comprising a plurality of output images at different times ($T_{i-2}$, $T_{i-1}$, $T_i$) separated by a given time interval, each output image being derived from a plurality of said subspectral images (321, 322, 323) acquired during the same acquisition time duration (T);
    wherein
    the scene illuminated by at least one of said illumination (241-243) is sensed by at least two of said groups of sensor elements (310); and wherein
    the unmixer (42) is configured to provide a first output image (431) at a first said time ($T_{i-2}$) by:

    obtaining a first set of weighted subspectral images (436, 437, 438) by weighting at least a portion of each subspectral image (321, 322, 323) of the set (32) according to spectral reconstruction contributions (6, 65) derived from spectral contributions (5) of said illuminations (241, 242, 243) to each group (311, 312, 313) of sensor elements, and
    combining the weighted subspectral images (436, 437, 438)) of said first set at said first time ($T_{i-2}$).

2.  The image acquisition system according to claim 1, wherein the spectral portions sensed by the groups of sensor elements cumulatively cover the entire visible spectrum; and/or
    wherein the image sensor is a colour image sensor;
    preferably the image sensor being a RGB image sensor (31) or a CMY image sensor.

3.  The image acquisition system according to claim 1 or 2,
    wherein the unmixer (42) is further configured to provide a second output image (432) at a second said time ($T_{i-1}$) by:

    obtaining a second set of weighted subspectral images (436', 437', 438') by weighting at least a portion of each subspectral image (321, 322, 323) of the set (32) according to spectral reconstruction contributions (6, 66) derived from said spectral contributions (5) of said illumination illuminations (241, 242, 243) to each group (311, 312, 313) of sensor elements, and
    combining the weighted subspectral images (436', 437', 438') of said second set.

4.  The image acquisition system according to any one of claims 1 to 3, wherein the unmixer (42) is further configured to provide a third output image (433) at a third said time ($T_i$) by:

    obtaining a third set of weighted subspectral images (436", 437", 438") by weighting at least a portion of each subspectral image (321, 322, 323) of the set (32) according to spectral reconstruction contributions (6, 67) derived from said spectral contributions (5) of said illumination illuminations (241, 242, 243) to each group (311, 312, 313) of sensor elements, and

combining the weighted subspectral images (436", 437", 438") of said third set.

5. The image acquisition system according to any one of claims 1 to 4, wherein the spectral contributions provided by each illumination of said sequence of illuminations to the groups of sensor elements built a well-conditioned matrix (6).

6. The image acquisition system according to claim 5, wherein the condition number of a matrix (6) formed by said spectral contributions is less than 20, preferably less than 10.

7. The image acquisition system according to any one of claims 1 to 6, wherein the illumination device comprises a plurality of distinct illumination sources, each providing an electromagnetic radiation with wavelengths within a distinct wavelength range;
preferably the number of illumination sources of said plurality of distinct illumination sources corresponding to the number of groups of said plurality of groups of sensor elements;
preferably each electromagnetic radiation is dominantly sensed by a different group of said groups of sensor elements;
preferably the illumination device comprises three coloured LEDs, preferably comprising a red LED providing a radiation perceived as red, a green LED providing a radiation perceived as green, and a blue LED providing a radiation perceived as blue.

8. The image acquisition system according to any one of the claims 1 to 7, wherein
each illumination of said sequence includes a same common illumination (81);
preferably said common illumination (81) being sensed by all of the groups of sensor elements (310);
preferably said common illumination (81) being provided by an external illumination source (8);
preferably the common illumination (81) being one or a combination of: an artificial light, an ambient light, a natural illumination.

9. The image acquisition system according to any one of claim 1 to 8, further comprising a calibration unit (44);
the calibration unit (44) being configured to determine the spectral contribution (5) provided by each illumination to each group of sensor elements.

10. The image acquisition system according to any one of claims 1 to 9, the image acquisition system being further configured to:

acquire a reference image of the scene by means of the image sensor (31); the scene being preferably illuminated by a reference illumination covering the entire visible spectrum;
retrieving colour information of the scene based on said reference image;
weighting the intensity of the first, second and/or third output image based on said retrieved colour information so as to produce a first and/or second coloured image of the scene.

11. The image acquisition system according to any one of claims 1 to 10, wherein the number of output images of said sequence (43) of output images (431, 432, 433) corresponds to the number of groups of said plurality of groups (311, 312, 313) of sensor elements (310); and/or
wherein the number of illuminations of said sequence of illuminations (24) corresponds to the number of output images of said sequence (43) of output images (431, 432, 433).

12. A microscope comprising an image acquisition system (1) according to any one of claims 1 to 11.

13. A method for acquiring a sequence of images of a scene, the method comprising steps of:

acquiring a set of subspectral images of the same scene during a given time duration; wherein each subspectral image is provided by sensing a different spectral portion of the electromagnetic spectrum, preferably of the visible spectrum;
during said given time duration, illuminating the scene by a first illumination (241) at a first time ($T_{i-2}$), a second illumination (242) at a second time ($T_{i-1}$), and a third illumination (243) at a third time ($T_i$), the scene at illumination (241, 242, 243) being sensed simultaneously by at least two groups (311, 312,313) of sensor elements (310);

wherein the method further comprises providing a first output image of the scene at said first time by:

obtaining a first set of weighted subspectral images (436, 437, 438) by weighting at least a portion of each subspectral image (321, 322, 323) of the set (32) according to spectral reconstruction contributions (6, 65) derived from said spectral contributions (5) of said illuminations (241, 242, 243) to each group (311, 312, 313) of sensor elements, and
combining the weighted subspectral images (436, 437, 438) of said first set.

14. The method according to claim 13, further obtaining a second set of weighted subspectral images (436', 437', 438') by weighting at least a portion of each subspectral image (321, 322, 323) of the set (32) according to the spectral reconstruction contribution (6, 66) derived from said spectral contributions (5) of said illumination illuminations (241, 242, 243) to each group (311, 312, 313) of sensor elements
combining the weighted subspectral images (436', 437', 438') of said second set.

15. The method according to any one of claims 13 to 14, further comprising:

obtaining a third set of weighted subspectral images (436", 437", 438") by weighting at least a portion of each subspectral image (321, 322, 323) of the set (32) according to the spectral reconstruction contribution (6, 67) derived from said spectral contributions (5) of said illumination illuminations (241, 242, 243) to each group (311, 312, 313) of sensor elements; and
combining the weighted subspectral images (436", 437", 438") of said third set.

16. The method according to any one of claims 13 to 15, wherein said first illumination (241) and said second and/or third illumination (242, 243) comprise a common illumination (81);
preferably said common illumination (81) being sensed by all of the groups of sensor elements (310).

17. The method according to any one of claims 13 to 16, further comprising:

acquiring a reference image of the scene; the scene being preferably illuminated by illumination covering the entire visible spectrum;
retrieving a colour information of the scene based on said reference image;
weighting the intensity of the first and/or second output image based on said retrieved colour information so as to produce a first and/or second coloured image of the scene.

18. The method according to any one of claims 13 to 17, further comprising selecting said portion of each subspectral image,
by prompting a user to select a portion in the subspectral image of the scene, and/or
by detecting a region of interest in the subspectral image of the scene.

**Patentansprüche**

1. Bilderfassungssystem (1), umfassend:

eine Beleuchtungsvorrichtung (2) zum Beleuchten einer Szene (9);
einen Bildsensor (31) umfassend mehrere Gruppen (311, 312, 313) von Sensorelementen (310), wobei jede Gruppe von Sensorelementen ein Teilspektrumsbild der Szene liefert durch Erfassen eines anderen Spektralabschnitts des elektromagnetischen Spektrums, vorzugsweise des sichtbaren Spektrums;
einen Controller (41), der ausgelegt ist zum Steuern:

des Bildsensors (31) zum Erfassen eines Satzes von Teilspektrumsbildern (321, 322, 323) der Szene während einer Erfassungszeitdauer, und
der Beleuchtungseinrichtung (2) zum Liefern einer gegebenen Sequenz von Beleuchtungen (24) bei unterschiedlichen Wellenlängen während der gegebenen Zeitdauer (T); und

einen Entmischer (42), der ausgelegt ist zum Liefern von mehreren Sequenzen (43) von Ausgabebildern (431, 432, 433) der Szene (9), wobei jede Sequenz mehrere Ausgabebilder zu unterschiedlichen Zeiten ($T_{i-2}$, $T_{i-1}$, $T_i$) getrennt durch ein gegebenes Zeitintervall umfasst, wobei jedes Ausgabebild von mehreren der während der gleichen Erfassungszeitdauer (T) erfassten Teilspektrumsbilder (321, 322, 323) abgeleitet ist;
wobei
die durch mindestens eine der Beleuchtung (241-243) beleuchtete Szene durch mindestens zwei der Gruppen von Sensorelementen (310) erfasst wird; und wobei
der Entmischer (42) ausgelegt ist zum Liefern eines ersten Ausgabebilds (431) bei einer ersten Zeit $T_{i-2}$ durch:

Erhalten einer ersten Menge von gewichteten Teilspektrumsbildern (436, 437, 438) durch Gewichten mindestens eines Abschnitts jedes Teilspektrumsbilds (321, 322, 323) des Satzes (32) gemäß Spektralrekonstruktionsbeiträgen (6, 65) abgeleitet von Spektralbeiträgen (5) der Beleuchtungen (241, 242, 243) zu jeder Gruppe (311, 312, 313) von Sensorelementen, und
Kombinieren der gewichteten Teilspektrumsbilder (436, 437, 438) des ersten Satzes zu der ersten Zeit ($T_{i-2}$).

2. Bilderfassungssystem nach Anspruch 1, wobei die durch die Gruppe von Sensorelementen erfassten Spektralabschnitte kumulativ das ganze sichtbare Spektrum abdecken; und/oder
wobei der Bildsensor ein Farbbildsensor ist;
wobei vorzugsweise der Bildsensor ein RGB-Bildsensor (31) oder ein CMY-Bildsensor ist.

3. Bilderfassungssystem nach Anspruch 1 oder 2,
wobei der Entmischer (42) weiter ausgelegt ist zum Liefern eines zweiten Ausgabebilds (432) zu einer zweiten Zeit $T_{i-1}$ durch:

Erhalten eines zweiten Satzes von gewichteten Teilspektrumsbildern (436', 437', 438') durch Gewichten mindestens eines Abschnitts jedes Teilspektrumsbilds (321, 322, 323) des Satzes (32) gemäß Spektrumsrekonstruktionsbeiträgen (6, 66) abgeleitet von den Spektralbeiträgen (5) der Beleuchtungen (241, 242, 243) zu jeder Gruppe (311, 312, 313) von Sensorelementen, und
Kombinieren der gewichteten Teilspektrumsbilder (436', 437', 438') des zweiten Satzes.

4. Bilderfassungssystem nach einem der Ansprüche 1 bis 3, wobei der Entmischer (42) weiter ausgelegt ist zum Liefern eines dritten Ausgabebilds (433) zu einer dritten Zeit ($T_i$) durch:

Erhalten eines dritten Satzes von gewichteten Teilspektrumsbildern (436", 437 438") durch Gewichten mindestens eines Abschnitts jedes Teilspektrumsbilds (321, 322, 323) des Satzes (32) gemäß Spektrumsrekonstruktionsbeiträgen (6, 67) abgeleitet von den Spektralbeiträgen (5) der Beleuchtungen (241, 242, 243) zu jeder Gruppe (311, 312, 313) von Sensorelementen, und
Kombinieren der gewichteten Teilspektrumsbilder (436", 437", 438") des dritten Satzes.

5. Bilderfassungssystem nach einem der Ansprüche 1 bis 4, wobei die durch jede Beleuchtung der Sequenz von Beleuchtungen zu der Gruppe von Sensorelementen gelieferten Spektralbeiträge eine wohlkonditionierte Matrix (6) bauten.

6. Bilderfassungssystem nach Anspruch 5, wobei die Konditionsanzahl einer durch die Spektralbeiträge gebildeten Matrix (6) unter 20 liegt, vorzugsweise unter 10.

7. Bilderfassungssystem nach einem der Ansprüche 1 bis 6, wobei die Beleuchtungseinrichtung mehrere unterschiedliche Beleuchtungsquellen umfasst, wobei jede eine elektromagnetische Strahlung mit Wellenlängen in einem eigenen Wellenlängenbereich liefert;
wobei vorzugsweise die Anzahl von Beleuchtungsquellen der mehreren unterschiedlichen Beleuchtungsquellen der Anzahl von Gruppen der mehreren Gruppen von Sensorelementen entspricht;
vorzugsweise jede elektromagnetische Strahlung durch eine andere Gruppe der Gruppe von Sensorelementen dominant erfasst wird;
vorzugsweise die Beleuchtungseinrichtung drei farbige LEDs umfasst, vorzugsweise umfassend eine rote LED, die eine Strahlung liefert, die als rot wahrgenommen wird, eine grüne LED, die eine Strahlung liefert, die als grün wahrgenommen wird, und eine blaue LED, die eine Strahlung liefert, die als blau wahrgenommen wird.

8. Bilderfassungssystem nach einem der Ansprüche 1 bis 7, wobei
jede Beleuchtung der Sequenz eine gleiche gemeinsame Beleuchtung (81) enthält;
vorzugsweise die gemeinsame Beleuchtung (81) durch alle der Gruppen von Sensorelementen (310) erfasst wird;

vorzugsweise die gemeinsame Beleuchtung (81) durch eine externe Beleuchtungsquelle (8) bereitgestellt wird; vorzugsweise die gemeinsame Beleuchtung (81) eines oder eine Kombination aus Folgendem ist: einem Kunstlicht, einem Umgebungslicht, einer natürlichen Beleuchtung.

9. Bilderfassungssystem nach einem von Anspruch 1 bis 8, weiter umfassend eine Kalibrierungseinheit (44); wobei die Kalibrierungseinheit (44) ausgelegt ist zum Bestimmen des durch jede Beleuchtung zu jeder Gruppe von Sensorelementen gelieferten Spektralbeitrags (5).

10. Bilderfassungssystem nach einem von Ansprüchen 1 bis 9, wobei das Bilderfassungssystem weiter ausgelegt ist zum:

Erfassen eines Referenzbilds der Szene mit Hilfe des Bildsensors (31); wobei die Szene vorzugsweise durch eine das ganze sichtbare Spektrum abdeckende Referenzbeleuchtung beleuchtet wird;
Abrufen von Farbinformationen der Szene auf Basis des Referenzbilds;
Gewichten der Intensität des ersten, zweiten und/oder dritten Ausgabebilds auf Basis der abgerufenen Farbinformationen, um ein erstes und/oder zweites Farbbild der Szene zu erzeugen.

11. Bilderfassungssystem nach einem der Ansprüche 1 bis 10, wobei die Anzahl von Ausgabebildern der Sequenz (43) von Ausgabebildern (431, 432, 433) der Anzahl von Gruppen der mehreren Gruppen (311, 312, 313) von Sensorelementen (310) entspricht; und/oder wobei die Anzahl von Beleuchtungen der Sequenz von Beleuchtungen (24) der Anzahl von Ausgabebildern der Sequenz (43) von Ausgabebildern (431, 432, 433) entspricht.

12. Mikroskop, umfassend ein Bilderfassungssystem (1) nach einem der Ansprüche 1 bis 11.

13. Verfahren zum Erfassen einer Sequenz von Bildern einer Szene, wobei das Verfahren die Schritte umfasst:

Erfassen eines Satzes von Teilspektrumsbildern der gleichen Szene während einer gegebenen Zeitdauer; wobei jedes Teilspektrumsbild durch Erfassen eines anderen Spektralabschnitts des elektromagnetischen Spektrums, vorzugsweise des sichtbaren Spektrums, geliefert wird;
während der gegebenen Zeitdauer, Beleuchten der Szene mit einer ersten Beleuchtung (241) zu einer ersten Zeit ($T_{i-2}$), einer zweiten Beleuchtung (242) bei einer zweiten Zeit ($T_{i-1}$) und einer dritten Beleuchtung (243) zu einer dritten Zeit ($T_i$), wobei die Szene bei der Beleuchtung (241, 242, 243) simultan durch mindestens zwei Gruppen (311, 312, 313) von Sensorelementen (310) erfasst wird;
wobei das Verfahren das Liefern eines ersten Ausgabebilds der Szene zu der ersten Zeit umfasst durch Erhalten einer ersten Menge von gewichteten Teilspektrumsbildern (436, 437, 438) durch Gewichten mindestens eines Abschnitts jedes Teilspektrumsbilds (321, 322, 323) des Satzes (32) gemäß Spektralrekonstruktionsbeiträgen (6, 65) abgeleitet von Spektralbeiträgen (5) der Beleuchtungen (241, 242, 243) zu jeder Gruppe (311, 312, 313) von Sensorelementen, und
Kombinieren der gewichteten Teilspektrumsbilder (436, 437, 438) des ersten Satzes.

14. Verfahren nach Anspruch 13, weiter Erhalten eines zweiten Satzes von gewichteten Teilspektrumsbildern (436' 437', 438') durch Gewichten mindestens eines Abschnitts jedes Teilspektrumsbilds (321, 322, 323) des Satzes (32) gemäß dem Spektrumsrekonstruktionsbeitrag (6, 66) abgeleitet von den Spektralbeiträgen (5) der Beleuchtungen (241, 242, 243) zu jeder Gruppe (311, 312, 313) von Sensorelementen, und
Kombinieren der gewichteten Teilspektrumsbilder (436', 437', 438') des zweiten Satzes.

15. Verfahren nach einem der Ansprüche 13 bis 14, weiter umfassend:

Erhalten eines dritten Satzes von gewichteten Teilspektrumsbildern (436", 437", 438") durch Gewichten mindestens eines Abschnitts jedes Teilspektrumsbilds (321, 322, 323) des Satzes (32) gemäß dem Spektrumsrekonstruktionsbeitrag (6, 67) abgeleitet von den Spektralbeiträgen (5) der Beleuchtungen (241, 242, 243) zu jeder Gruppe (311, 312, 313) von Sensorelementen, und
Kombinieren der gewichteten Teilspektrumsbilder (436", 437", 438") des dritten Satzes.

16. Verfahren nach einem der Ansprüche 13 bis 15, wobei die erste Beleuchtung (241) und die zweite und/oder dritte Beleuchtung (242, 243) eine gemeinsame Beleuchtung (81) umfassen;
wobei vorzugsweise die gemeinsame Beleuchtung (81) durch alle der Gruppen von Sensorelementen (310) erfasst wird.

17. Verfahren nach einem der Ansprüche 13 bis 16, weiter umfassend:

Erfassen eines Referenzbilds der Szene; wobei die Szene vorzugsweise durch eine das ganze sichtbare Spektrum abdeckende Beleuchtung beleuchtet wird;
Abrufen von Farbinformationen der Szene auf Basis des Referenzbilds;
Gewichten der Intensität des ersten und/oder zweiten Ausgabebilds auf Basis der abgerufenen Farbinformationen, um ein erstes und/oder zweites Farbbild der Szene zu erzeugen.

18. Verfahren nach einem der Ansprüche 13 bis 17, weiter umfassend das Wählen des Abschnitts jedes Teilspektrumsbilds,
dadurch, dass ein Nutzer aufgefordert wird, einen Abschnitt in dem Teilspektrumsbild der Szene zu wählen, und/oder durch Detektieren eines interessierenden Gebiets in dem Teilspektrumsbild der Szene.

## Revendications

1. Un système d'acquisition d'images (1) comprenant :

un dispositif d'illumination (2) pour illuminer une scène (9) ;
un capteur d'images (3) comprenant une pluralité de groupes (311, 312, 313) d'éléments de capteur (310), chaque groupe d'éléments de capteur fournissant une image sous-spectrale de la scène en captant une portion spectrale différente du spectre électromagnétique, de façon préférentielle, du spectre visible ;
un dispositif de contrôle (41) configuré pour contrôler :

le capteur d'images (3) afin d'acquérir un ensemble d'images sous-spectrales (321, 322, 323) de la scène pendant une période d'acquisition, et
le dispositif d'illumination (2) pour produire une séquence donnée d'illuminations (24) à différentes longueurs d'ondes pendant la période d'acquisition (T) ; et

un démixeur (42) configuré pour produire une pluralité de séquences (43) d'images de sortie (431, 432, 433) de la scène (9), chaque séquence comprenant une pluralité d'images de sortie à différents instants ($T_{i-2}$, $T_{i-1}$, $T_i$) séparés par un intervalle de temps donné, chaque image de sortie étant obtenue à partir d'une pluralité des images sous-spectrales (321, 322, 323) acquises pendant la période d'acquisition (T) ;
dans lequel
la scène illuminée par au moins une illumination parmi la séquence d'illuminations (241-243) est captée par au moins deux groupes d'éléments de capteur parmi la pluralité d'éléments de capteur (310) ; et dans lequel
le démixeur (42) est configuré pour produire une première image de sortie (431) à un premier instant ($T_{i-2}$) parmi les différents instants, en:

obtenant un premier ensemble d'images sous-spectrales pondérées (436, 437, 438) en pondérant au moins une portion de chaque image sous-spectrale (321, 322, 323) de l'ensemble (32) en fonction de contributions de reconstruction spectrale (6, 65), obtenues de contributions spectrales (5) des illuminations (241, 242, 243), à chaque groupe (311, 312, 313) d'éléments de capteur, et
en combinant les images sous-spectrales pondérées (436, 437, 438) du premier ensemble au premier instant ($T_{i-2}$).

2. Système d'acquisition d'images selon la revendication 1, dans lequel les portions spectrales captées par les groupes d'éléments de capteur recouvrent cumulativement la totalité du spectre visible ; et/ou dans lequel le capteur d'images est un capteur d'images en couleur;
de façon préférentielle, le capteur d'images étant un capteur d'images RGB (31) ou un capteur d'images CMY.

3. Système d'acquisition d'images selon l'une des revendications 1 ou 2, dans lequel le démixeur (42) est en outre configuré pour produire une deuxième image de sortie (432) à un deuxième instant ($T_{i-1}$) parmi les différents instants, en :

obtenant un deuxième ensemble d'images sous-spectrales pondérées (436', 437', 438') en pondérant au moins une portion de chaque image sous-spectrale (321, 322, 323) de l'ensemble (32) en fonction de contributions de reconstruction spectrale (6, 66), obtenues des contributions spectrales (5) des illuminations (241, 242, 243), à chaque groupe (311, 312, 313) d'éléments de capteur, et combinant les images sous-spectrales pondérées (436', 437', 438') du deuxième ensemble.

4. Système d'acquisition d'images selon l'une des revendications 1 à 3, dans lequel le démixeur (42) est en outre configuré pour produire une troisième image de sortie (432) à un troisième instant ($T_i$) parmi les différents instants, en :

obtenant un troisième ensemble d'images sous-spectrales pondérées (436", 437", 438") en pondérant au moins une portion de chaque image sous-spectrale (321, 322, 323) de l'ensemble (32) en fonction de contributions de reconstruction spectrale (6, 67), obtenues des contributions spectrales (5) des illuminations (241, 242, 243), à chaque groupe (311, 312, 313) d'éléments de capteur, et combinant les images sous-spectrales pondérées (436', 437', 438') du troisième ensemble.

5. Système d'acquisition d'image selon l'une des revendications 1 à 4, dans lequel les contributions spectrales de chaque illumination parmi la séquence d'illuminations aux groupes d'éléments de capteur sont utilisés pour former une matrice bien-conditionnée (6).

6. Système d'acquisition d'images selon la revendication 5, dans lequel le nombre de conditionnement d'une matrice (6) formée par les contributions spectrales est inférieur à 20, de façon préférentielle, inférieur à 10.

7. Système d'acquisition d'images selon l'une des revendications 1 à 6, dans lequel, le dispositif d'illumination comprend une pluralité de sources d'illumination distinctes, chacune émettant une radiation électromagnétique de longueurs d'ondes dans une plage de valeurs distincte ;
de façon préférentielle, le nombre de sources d'illumination de la pluralité de sources distinctes d'illumination correspond au nombre de groupes dans la pluralité de groupe d'éléments de capteur;
de façon préférentielle, chaque radiation électromagnétique est captée de manière dominante par un groupe différent parmi la pluralité de groupes d'éléments de capteur;
de façon préférentielle, le dispositif d'illumination comprend trois LEDs colorée, préférablement une LED rouge émettant une radiation perçue comme rouge, une LED verte émettant une radiation perçue comme verte et une LED bleue émettant une radiation perçue comme bleue.

8. Système d'acquisition d'images selon l'une des revendications 1 à 7, dans lequel
chaque illumination parmi la séquence d'illuminations inclut une illumination commune (81);
de façon préférentielle, l'illumination commune (81) étant captée par tous les groupe d'éléments de capteur (310) ;
de façon préférentielle, l'illumination commune (81) étant fournie par une source d'illumination externe (8) ;
de façon préférentielle, l'illumination commune (81) étant sélectionnée parmi : une lumière artificielle, une lumière ambiante, une lumière naturelle.

9. Système d'acquisition d'image selon l'une des revendications 1 à 8, comprenant en outre une unité de calibration (44) ;
l'unité de calibration (44) étant configurée pour déterminer la contribution spectrale (5) des illuminations à chaque groupe d'éléments de capteur.

10. Système d'acquisition d'images selon l'une des revendication 1 à 9, étant en outre configuré pour
acquérir une image de référence de la scène en utilisant le capteur d'image (31) ; la scène étant préférablement illuminé par une illumination de référence recouvrant la totalité du spectre visible ;
récupérer des informations de couleurs sur la scène en fonction de l'image de référence ;
pondérer l'intensité the la première, deuxième et/ou troisième image de sortie en fonction des informations de couleurs de sorte à produire une première et/ou une deuxième image colorée de la scène.

11. Système d'acquisition d'images selon l'une des revendications 1 à 10, dans lequel le nombre d'images de sortie de la séquence (43) d'images de sortie (431, 432, 433) correspond au nombre de groupes dans la pluralité de groupes (311, 312, 313) d'éléments de capteur (310) ; et/ou dans lequel le nombre d'illuminations de la séquence d'illuminations (24) correspond au nombre d'images de sortie de la séquence (43) d'images de sortie (431, 432, 433).

12. Un microscope comprenant un système d'acquisition d'images (1) selon l'une des revendications 1 à 11.

**13.** Une méthode d'acquisition d'une séquence d'images d'une scène, la méthode comprenant les étapes de :

acquérir un ensemble d'images sous-spectrales de la même scène pendant une période donnée ; chaque image sous-spectrale étant obtenue en captant une portion différente du spectre électromagnétique, de façon préférentielle, du spectre visible ;
pendant la période donnée, illuminer la scène avec une première illumination (241) à un premier instant ($T_{i-2}$), une deuxième illumination à un deuxième instant ($T_{i-1}$), et une troisième illumination à un instant ($T_i$), la scène lors de l'illumination (241, 242, 243) étant captée simultanément par au moins deux groupes (311, 312, 313) d'éléments de capteurs (310) ;

la méthode comprenant en outre une étape :
de obtenir une première image de sortie de la scène au premier instant en :

obtenant un premier ensemble d'images sous-spectrales pondérées (436, 437, 438) en pondérant au moins une portion de chaque image sous-spectrale (321, 322, 323) de l'ensemble (32) en fonction de contributions de reconstruction spectrale (6, 65) obtenue des contributions spectrales (5) des illuminations (241, 242, 243) à chaque groupe (311, 312, 313) d'éléments de capteurs, et en
combinant les images sous-spectrales pondérées (436, 437, 438) du premier ensemble.

**14.** Méthode selon la revendication 13, comprenant en outre une étape de :

obtenir un deuxième ensemble d'images sous-spectrales pondérées (436', 437', 438') en pondérant au moins une portion de chaque image sous-spectrale (321, 322, 323) de l'ensemble (32) en fonction de contributions de reconstruction spectrale (6, 66), obtenues des contributions spectrales (5) des illuminations (241, 242, 243), à chaque groupe (311, 312, 313) d'éléments de capteur, et en
combinant les images sous-spectrales pondérées (436', 437', 438') du deuxième ensemble.

**15.** Méthode d'acquisition d'images selon l'une des revendications 13 à 14, comprenant en outre une étape de :

obtenir un troisième ensemble d'images sous-spectrales pondérées (436", 437", 438") en pondérant au moins une portion de chaque image sous-spectrale (321, 322, 323) de l'ensemble (32) en fonction de contributions de reconstruction spectrale (6, 67), obtenues des contributions spectrales (5) des illuminations (241, 242, 243), à chaque groupe (311, 312, 313) d'éléments de capteur, et en
combinant les images sous-spectrales pondérées (436', 437', 438') du troisième ensemble.

**16.** Méthode selon l'une des revendications 13 à 15, dans laquelle la première illumination (241) et la deuxième et/ou troisième illumination (242, 243) comprennent une illumination commune (81) ;
de façon préférentielle, l'illumination commune (81) étant captée par tous les groupes parmi les groupes d'éléments de capteur (310).

**17.** Méthode selon l'une des revendications 13 à 16, comprenant en outre les étapes de :

acquérir une image de référence de la scène ; de façon préférentielle, la scène étant illuminée par une illumination recouvrant la totalité du spectre visible ;
récupérer des informations de couleurs sur la scène en fonction de l'image de référence ;
pondérer l'intensité de la première et/ou deuxième image de sortie en fonction des informations de couleurs récupérées de sorte à produire une première et/ou une deuxième image colorée de la scène.

**18.** Méthode selon l'une des revendications 13 à 17, comprenant en outre une étape de :
sélectionner la portion de chaque image sous-spectrale

en invitant un utilisateur à sélectionner une portion dans l'image sous-spectrale de la scène, et/ou
en détectant une zone d'intérêt dans l'image sous-spectrale de la scène.

Figure 1

Figure 2

Figure 3

| LED | Wavelenth |
|---|---|
| Red (R) | 620 nm |
| Green (G) | 525 nm |
| Blue (B) | 465 nm |
| Amber (A) | 595 nm |
| White (W) | broad spectrum |
| Ultraviolet (UV) | 395 nm |

Figure 4

Figure 5

Figure 6a

Figure 6b

| LEDs | R-G-B | A-G-UV | B-UV-W | R-UV-B |
|---|---|---|---|---|
| Conditioning number $k$ | 1.9 | 2.6 | 49.1 | 91.5 |
| Reconstruction | good | good | noisy, flickering | noisy, flickering |

Figure 7

Figure 8

Figure 9

Figure 10a

Figure 10b

Figure 10c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105959658